# EUROPÄISCHE PATENTSCHRIFT

(11) **EP 0 488 072 B1**
(45) Veröffentlichungstag und Bekanntmachung des Hinweises auf die Patenterteilung: **15.03.1995**
(21) Anmeldenummer: 91119935.4
(22) Anmeldetag: 23.11.1991
(51) Int. Cl.: B60J 1/00, B08B 1/02, B29C 67/00, B32B 17/10

(54) **Verfahren zur Randfugenversiegelung einer Isolierglaseinheit und Vorrichtung für die Durchführung des Verfahrens**
Method for filling the peripheral edge joints of a double glazing with a sealant and device for its realisation
Méthode de remplissage du joint périphérique d'un vitrage multiple par injection d'une matière d'étanchéité et dispositif pour sa réalisation

(30) Priorität: 27.11.1990 DE 4037638
(43) Veröffentlichungstag der Anmeldung: 03.06.1992
(73) Patentinhaber: FLACHGLAS AKTIENGESELLSCHAFT, 90766 Fürth (DE)
(72) Erfinder: Jacobi, Dieter,, D-4230 Wesel (DE); Bartelsen, Lutz, Dipl. Phys, D-4236 Hamminkeln (DE); Knospe, Ralf Dipl. Ing., D-4236 Hamminkeln (DE); Tünker, Gerhard, Dipl. Min., D-4100 Duisburg (DE); Zurhelle, Harald Dipl. Ing., D-4230 Wesel (DE)
(74) Vertreter: Andrejewski, Walter

(56) Entgegenhaltungen:
- US-A- 4 145 171

## Beschreibung

Die Erfindung betrifft ein Verfahren zur Randfugenversiegelung einer Isolierglaseinheit, insbesondere einer Kraftfahrzeug-Isolierglaseinheit, die eine Innenscheibe, eine Außenscheibe, ggf. einen Abstandshalter und eine Randfuge sowie an einer der Glasscheiben einen Überstandsstreifen aufweist, wobei die Randfuge im Überschuß mit einem Kleber gefüllt wird und überschüssiger Kleber sich als Wulst randfugenseitig auf dem Überstandsstreifen ablegt und wobei der überschüssige Kleber mechanisch entfernt wird. - Die Erfindung betrifft fernerhin eine Vorrichtung, die für die Durchführung des Verfahrens besonders geeignet ist.

Bei den bekannten Maßnahmen, von denen die Erfindung ausgeht (DE-A-39 26 848, Regel 29(1) EPÜ) wird der Kleber einschließlich der Überschußmasse zur Erhärtung gebracht und die Überschußmasse wird von einem mechanischen Werkzeug abgetragen. Dabei erfolgt die Erhärtung der Überschußmasse auf dem Überstandsstreifen. Beim Abtragen der Überschußmasse erzeugt das mechanische Werkzeug eine glatte Sichtfläche des Klebers in der Randfuge. Längs des Randes der Innenscheibe und auf dem Überstandsstreifen wird jeweils ein Schneidmesser mit federnder Anlage geführt und mit dem Schneidmesser wird die Überschußmasse schneidend abgetragen. Danach wird die Schnittfläche mit einer rotierenden Bürste oder dergleichen geglättet. Diese bekannten Maßnahmen haben sich bewährt, sind jedoch hinsichtlich der erforderlichen Arbeitszeit zum Abarbeiten der Überschußmasse verbesserungsfähig. Bei anderen bekannten Maßnahmen (DE-A-40 33 660) wird der überschüssige Kleber im noch weichen Zustand entfernt. Dazu wird längs der Randfuge im Bereich des überschüssigen Klebers translatorisch eine Glättwalze geführt. Die Glättwalze wird bei der translatorischen Bewegung entgegen der Rotationsrichtung ihrer theoretischen Abwälzbewegung rotierend angetrieben. Die Rotationsgeschwindigkeit der Glättwalze wird so gewählt, daß der überschüssige Kleber am Mantel der Glättwalze abgetragen wird sowie gleichzeitig die freigelegte Kleberfläche geglättet wird. Der überschüssige Kleber wird von dem Mantel der Glättwalze mit Hilfe eines Abstreifers abgenommen. Auch diese Maßnahmen haben sich bewährt, sie lassen eine hohe Arbeitsgeschwindigkeit zu, verlangen jedoch einen Kleber, der im kontinuierlichen Betrieb in der beschriebenen Weise geglättet und von dem Mantel der Glättwalze mitgenommen sowie mit Hilfe eines Abstreifers von dieser abgenommen werden kann.

Der Erfindung liegt die Aufgabe zugrunde, ein Verfahren mit den eingangs beschriebenen Verfahrensschritten anzugeben, welches ohne Schwierigkeiten mit allen für die Herstellung von Isolierglaseinheiten und insbesondere Kraftfahrzeug-Isolierglaseinheiten gebräuchlichen Klebern durchgeführt werden kann und niedrige Bearbeitungszeiten zuläßt, und zwar unter Erzeugung einer sehr glatten Sichtfläche des Klebers in der Randfuge. Der Erfindung liegt fernerhin die Aufgabe zugrunde, eine einfache Vorrichtung zur Durchführung eines solchen Verfahrens anzugeben, die ohne Schwierigkeiten in eine bestehende Fertigungsstraße für die automatische Randversiegelung von Isolierglaseinheiten integriert werden kann.

Zur Lösung dieser Aufgabe lehrt die Erfindung, daß zuerst der Wulst des überschüssigen Klebers von dem Kleber in der Randfuge mit Hilfe eines Trennmessers abgetrennt wird, jedoch auf dem Überstandsstreifen liegengelassen wird, und daß danach der abgetrennte Wulst in einem folgenden Verfahrensschritt entfernt wird. Vorzugsweise wird der Wulst abgeschert oder abgefräst. Die Erfindung beruht auf der Erkenntnis, daß die Herstellung der glatten Trennfläche des Klebers in der Randfuge einerseits und die Entfernung des überschüssigen Klebers andererseits tunlichst in zwei ausreichend getrennten Verfahrensschritten vorgenommen wird, die ohne weiteres bei allen gebräuchlichen Klebern praktizierbar sind und unabhängig voneinander optimiert werden können. Eine bevorzugte Ausführungsform der Erfindung, die sich besonders bewährt hat, ist dadurch gekennzeichnet, daß der Wulst des überschüssigen Klebers im noch weichen Zustand von dem Kleber in der Randfuge abgetrennt wird und daß der abgetrennte Wulst im erhärteten Zustand abgeschert oder abgefräst wird. Beim Abtrennen des Wulstes von dem Kleber in der Randfuge wird zweckmäßigerweise eine Trennfuge freigelegt. Insoweit beruht die Erfindung auf der Erkenntnis, daß eine glatte Stirnfläche des Klebers in der Randfuge insbesondere dann leicht erreicht werden kann, wenn diese Stirnfläche im noch weichen Zustand des Klebers verwirklicht wird, was erfindungsgemäß durch die Herstellung der Trennfuge erfolgt. Ist der Wulst aus überschüssigem Kleber erhärtet, so kann er auf sehr einfache Weise und sehr vollständig von dem Überstandsstreifen abgeschert oder abgefräst werden.

Zur Lösung der oben erwähnten Aufgabe schlägt die Erfindung auch eine Vorrichtung vor, die die im Anspruch 9 definierten Merkmale aufweist.

Im einzelnen bestehen im Rahmen der Erfindung mehrere Möglichkeiten der weiteren Ausbildung und Gestaltung. So kann das Trennmesser beim Abtrennen des Wulstes von dem Kleber in der Randfuge am Rand der gegenüber dem Überstandsstreifen zurückspringenden Scheibe geführt und/oder auf dem Überstandsstreifen geführt sein. Man kommt so zu einer sehr definierten Trennung mit einer sehr glatten Stirnfläche. Das Abscheren oder Abfräsen des abgetrennten Wulstes kann entsprechend mit einem Werkzeug durchgeführt werden, welches am Rand der gegenüber dem Überstandsstreifen zurückspringenden Scheibe und/oder auf dem Überstandsstreifen geführt wird. Vorzugsweise wird das Trennmesser mit einstellbarem Abstand unmittelbar hinter der Kleberspritzdüse geführt. Eine bevorzugte Ausführungsform der Erfindung ist dadurch gekennzeichnet, daß der Wulst auf einen Überstandsstreifen abgelegt wird, der eine Beschichtung mit einem Trennmittel aufweist, und daß der abgetrennte Wulst von dem Überstandsstreifen abgezogen oder abgeschert wird.Gleichzeitig kann dabei auch das Trennmittel entfernt werden. Zweckmäßigerweise wird dabei mit einem Trennmittel gearbeitet, welches hauptsächlich aus Glyzerin besteht. Das Trennmittel kann aber auch aus Ethylcellulose oder Polystyrol bestehen. Das Trennmittel kann insbesondere in Form eines zusammenhängenden Klebebandes aus Papier oder Kunststoff vor dem Kleberauftrag auf den Überstandsstreifen aufgebracht werden. Im Ergebnis können bei Verwirklichung der erfindungsgemäßen Verfahrensschritte die Arbeitszeiten zur Herstellung einer glatten Klebersichtkante erheblich verkürzt werden. Alle bei der Herstellung von Isolierglaseinheiten und insbesondere Kraftfahrzeug-Isolierglaseinheiten gebräuchlichen Kleber können eingesetzt werden. Sowohl die Stirnfläche des Klebers in der Trennfuge genügt allen Anforderungen als auch der Überstandsstreifen, der ohne Schwierigkeiten sehr vollständig von dem Wulst des überschüssigen Klebers befreit werden kann, wenn der Kleber erhärtet ist. Eine Reinigung mit Bürsten kann angeschlossen werden.

Im folgenden werden das erfindungsgemäße Verfahren sowie eine Vorrichtung für die Durchführung anhand einer lediglich ein Ausführungsbeispiel darstellenden Zeichnung ausführlicher erläutert. Es zeigen in schematischer Darstellung
- Fig. 1: einen ersten Verfahrensschritt des erfindungsgemäßen Verfahrens in einem Schnitt durch eine Kraftfahrzeug-Isolierglaseinheit,
- Fig. 2: entsprechend der Fig. 1 das Ergebnis des ersten Verfahrensschrittes,
- Fig. 3: in einer Draufsicht auf einen Gegenstand entsprechend der Fig. 2 das Abscheren des Wulstes aus dem überschüssigen Kleber,
- Fig. 4: eine Ansicht des Gegenstandes der Fig. 3 entgegen der Bewegungsrichtung des Abscherwerkzeuges,
- Fig. 5: perspektivisch die Ansicht einer Vorrichtung für die Durchführung des beschriebenen Verfahrens und
- Fig. 6: das Getriebeschema aus dem Gegenstand der Fig. 5.

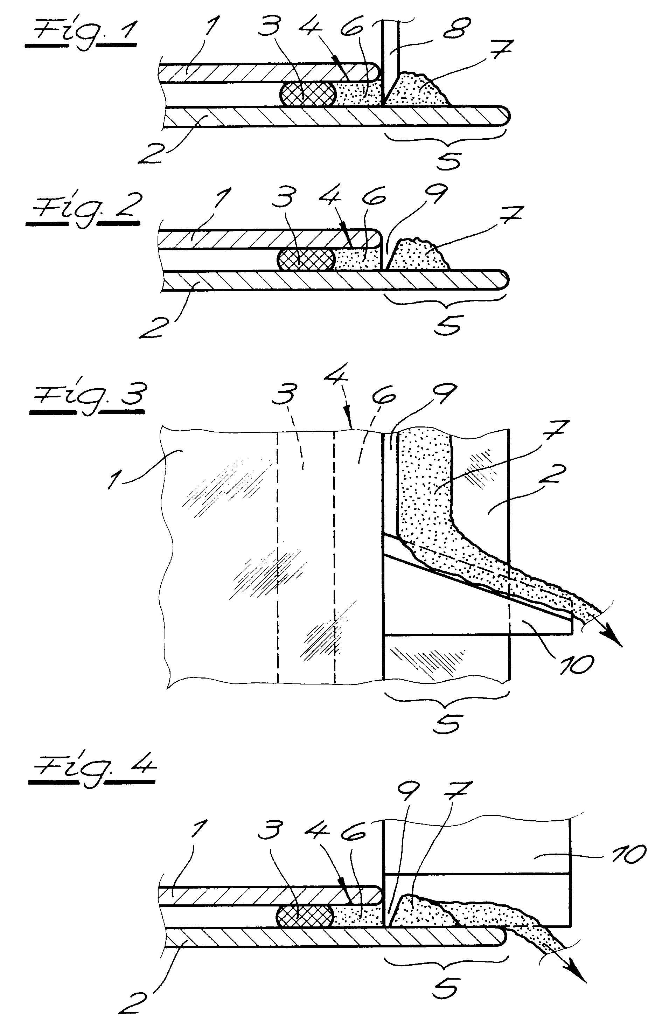

Die in den Figuren 1 bis 4 dargestellte Isolierglasscheibe ist eine Kraftfahrzeug-Isolierglasscheibe. Sie besitzt eine Innenscheibe 1, eine Außenscheibe 2, einen Abstandshalter 3 und eine Randfuge 4 im Bereich vor dem Abstandshalter 3 nach außen hin. Eine der Glasscheiben weist einen Überstandsstreifen 5 auf, mit dem bekanntlich Kraftfahrzeug-Isolierglaseinheiten in entsprechenden Führungen am Kraftfahrzeug geführt oder auch nur befestigt werden.

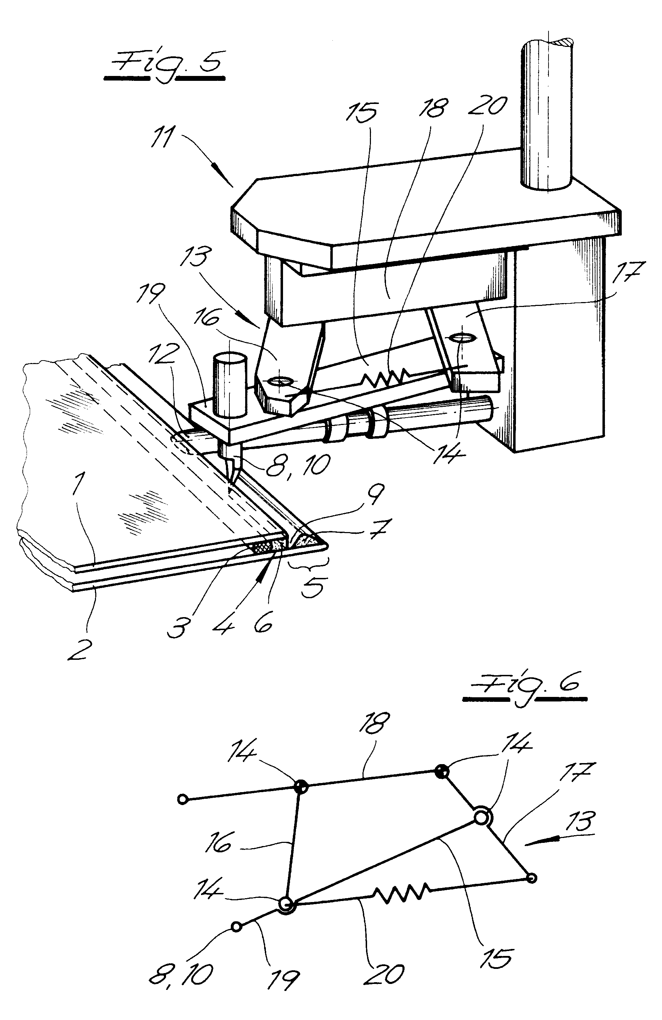

Insbesondere aus der Fig. 1 entnimmt man, daß die Randfuge 4 im Überschuß mit einem Kleber 6 gefüllt worden ist und der überschüssige Kleber sich als Wulst 7 randfugenseitig auf den Überstandsstreifen 5 aufgelegt hat. Man erkennt in der Fig. 1, daß der Wulst 7 des überschüssigen Klebers von dem Kleber 6 in der Randfuge 4 mit Hilfe eines Trennmessers 8 abgetrennt wird. Er bleibt jedoch, wie sich aus einer vergleichenden Betrachtung der Fig. 1 und 2 sowie auch aus der Fig. 3 ergibt, auf dem Überstandsstreifen 5 liegen. Der abgetrennte Wulst 7 wird nachträglich in einem folgenden Verfahrensschritt abgeschert oder abgefräst. Im Ausführungsbeispiel und nach bevorzugter Ausführungsform der Erfindung wird der Wulst 7 des überschüssigen Klebers im noch weichen Zustand von dem Kleber 6 in der Randfuge 4 abgetrennt. Der abgetrennte Wulst 7 wird jedoch auf dem Überstandsstreifen 5 zur Erhärtung gebracht und danach abgeschert oder abgefräst. In der Fig. 2 erkennt man, daß beim Abtrennen des Wulstes 7 von dem Kleber 6 in der Randfuge 4 eine Trennfuge 9 freigelegt wird. Die Gestaltung des Trennmessers 8 ist weitgehend beliebig. Insbesondere kann ein dünner Stahlstift die Trennmesserfunktion übernehmen. Es empfiehlt sich, an dem Trennmesser 8 zum Überstandsstreifen 5 hin eine dünne Kunststoffbeschichtung anzubringen, um zu verhindern, daß die Außenscheibe 2 Kratzer erfährt.

Die Fig. 1 macht deutlich, daß das Trennmesser 8 beim Abtrennen des Wulstes 7 am Rand der gegenüber dem Überstandsstreifen 5 zurückspringenden Scheibe und auf dem Überstandsstreifen 5 selbst geführt wird. Das Abscheren des abgetrennten Wulstes 7 erfolgt mit einem Werkzeug 10, welches, wie die Fig. 3 und 4 erkennen lassen, ebenfalls am Rand der gegenüber dem Überstandsstreifen 5 zurückspringenden Scheibe und auf dem Überstandsstreifen geführt wird.

In den Figuren 5 und 6 erkennt man eine Vorrichtung, die für die Durchführung des Verfahrens eingerichtet ist. Sie ist im Rahmen einer Anlage für die Randfugenversiegelung von Isolierglaseinheiten verwendbar, die einen Roboterkopf 11 mit einem Düsenfinger 12 für das Einbringen des Klebers 6 in die Randfuge 4 sowie für das gleichzeitige Aufbringen des überschüssigen Klebers 7 an dem Überstandsstreifen 5 aufweist. Es versteht sich, daß der Roboterkopf 11 nach Maßgabe der Isolierglaseinheit 1, 2, 3, wie an sich bekannt, gesteuert ist. Die Fig. 5 zeigt perspektivisch den Roboterkopf 11 mit den angeschlossenen erfindungsgemäßen Bauteilen.

Aus einer vergleichenden Betrachtung der Figuren 5 und 6 entnimmt man, daß an den Roboterkopf 11 ein ebenes Hebelviereck-Getriebe 13 angeschlossen ist. Die Hebel dieses Hebelviereck-Getriebes sind über Gelenke 14 miteinander verbunden und in einer zur Ebene der Isolierglaseinheit 1, 2, 3 parallelen Ebene angeordnet. Das Hebelviereck-Getriebe 13 besitzt einen Arbeitshebel 15 und zwei daran angeschlossene Lenkerhebel 16, 17. Die Lenkerhebel 16, 17 sind andererseits an dem Roboterkopf 11 mit Hilfe von Gelenken 14 gelagert, die auf einer zum Düsenfinger 12 hin verlaufenden Geraden 18 angeordnet sind. Der Arbeitshebel 15 besitzt eine Verlängerung 19, die das Trennmesser 8 sowie ein Abscherwerkzeug 10 für den Wulst 7 aus überschüssigem Kleber trägt. Das Trennmesser 8 und/oder das Abscherwerkzeug 10 sind mit Hilfe einer Feder 20 an die Kontur der Isolierglaseinheit 1, 2, 3 angedrückt, wie es in der Fig. 5 erkennbar ist. Auf diese Weise sind das Trennmesser 8 und das Abscherwerkzeug 10 durch die Kontur der Isolierglaseinheit 1, 2, 3 und durch die aus dem Hebelviereck-Getriebe 13 resultierende Kinematik längs der Kontur der Isolierglaseinheit 1, 2, 3 so gesteuert, daß die im Zusammenhang mit den Figuren 1 bis 4 erläuterte Bearbeitung erfolgt. Im Ausführungsbeispiel ist das Abscherwerkzeug 10 als Pflug ausgeführt. Das Trennmesser 8 sowie das Abscherwerkzeug 10 bewegen sich entlang der Isolierglaseinheit 1, 2, 3. Die Kurve stellt sich im übrigen so ein, daß das Trennmesser 8 und das Abscherwerkzeug 10 im Bereich der Ecken der Isolierglaseinheit 1, 2, 3, auch wenn in den Ecken nur ein sehr kleiner Krümmungsradius verwirklicht ist, nicht hängenbleiben können. Von besonderem Vorteil ist, daß für die erfindungsgemäße Vorrichtung ein selbständiger Antrieb und eine nach Maßgabe eines Rechners oder dergleichen erfolgende Steuerung nicht erforderlich sind.

## Patentansprüche

1. Verfahren zur Randfugenversiegelung einer Isolierglaseinheit, insbesondere einer Kraftfahrzeug-Isolierglaseinheit, die eine Innenscheibe (1), eine Außenscheibe (2), ggf. einen Abstandshalter (3) und eine Randfuge (4) sowie an einer der Glasscheiben einen Überstandsstreifen (5) aufweist,
wobei die Randfuge im Überschuß mit einem Kleber gefüllt wird und überschüssiger Kleber sich als Wulst (7) randfugenseitig auf dem Überstandsstreifen (5) ablegt.
und wobei der überschüssige Kleber mechanisch entfernt wird, **dadurch gekennzeichnet,** daß zuerst der Wulst (7) des überschüssigen Klebers von dem Kleber in der Randfuge mit Hilfe eines Trennmessers abgetrennt wird, jedoch auf dem Überstandsstreifen (5) liegengelassen wird, und daß danach der abgetrennte Wulst (7) in einem folgenden Verfahrensschritt entfernt wird.

2. Verfahren nach Anspruch 1, dadurch gekennzeichnet, daß der abgetrennte Wulst (7) abgeschert oder abgefräst wird.

3. Verfahren nach einem der Ansprüche 1 oder 2, dadurch gekennzeichnet, daß der Wulst (7) des überschüssigen Klebers in noch weichem Zustand von dem Kleber in der Randfuge abgetrennt wird und daß der abgetrennte Wulst (7) im erhärteten Zustand von dem Überstandsstreifen abgeschert oder abgefräst wird.

4. Verfahren nach einem der Ansprüche 1 bis 3, dadurch gekennzeichnet, daß beim Abtrennen des Wulstes (7) von dem Kleber in der Randfuge eine Trennfuge (9) freigelegt wird.

5. Verfahren nach einem der Ansprüche 1 bis 4, dadurch gekennzeichnet, daß das Trennmesser beim Abtrennen des Wulstes am Rand der gegenüber dem Überstandsstreifen (5) zurückspringenden Scheibe und/oder auf dem Überstandsstreifen (5) geführt wird.

6. Verfahren nach einem der Ansprüche 1 bis 5, dadurch gekennzeichnet, daß das Abscheren oder Abfräsen des abgetrennten Wulstes (7) mit einem Werkzeug durchgeführt wird, welches am Rand der gegenüber dem Überstandsstreifen (5) zurückspringen den Scheibe und/oder auf dem Überstandsstreifen (5) geführt wird.

7. Verfahren nach Anspruch 1, dadurch gekennzeichnet, daß der Wulst (7) auf einen Überstandsstreifen (5) abgelegt wird, der eine Beschichtung mit einem Trennmittel aufweist, und daß der abgetrennte Wulst (7) von dem Überstandsstreifen (5) abgezogen oder abgeschert wird.

8. Verfahren nach Anspruch 7, dadurch gekennzeichnet, daß mit einem Trennmittel in Form eines zusammenhängenden Klebebandes gearbeitet wird.

9. Vorrichtung für die Durchführung des Verfahrens nach Anspruch 6 im Rahmen einer Anlage für die Randfugenversiegelung von Isolierglaseinheiten, die einen Roboterkopf mit einem Düsenfinger für das Einbringen des Klebers in die Rand fuge sowie für das gleichzeitige Aufbringen des überschüssigen Klebers auf den Überstandsstreifen aufweist, wobei der Roboterkopf nach Maßgabe der Kontur der Isolierglaseinheit gesteuert wird, **dadurch gekennzeichnet**, daß an den Roboterkopf (11) ein ebenes Hebelviereck-Getriebe (13) angeschlossen ist, dessen Hebel über Gelenke (14) miteinander verbunden sowie in einer zur Ebene der Isolierglaseinheit (1, 2, 3) parallelen Ebene angeordnet sind und welches einen Arbeitshebel (15) und zwei daran angeschlossene Lenkerhebel (16, 17) aufweist, wobei die Lenkerhebel (16, 17) andererseits an dem Roboterkopf (11) mit Hilfe von Gelenken (14) gelagert sind, die auf einer zum Düsenfinger (12) hin verlaufenden Geraden (18) angeordnet sind, daß der Arbeitshebel (15) eine Verlängerung (19) aufweist, die das Trennmesser (8) sowie ein Abscherwerkzeug (10) für den Wulst (7) aus überschüssigem Kleber trägt, und daß das Trennmesser (8) und/oder das Abscherwerkzeug (10) mit Hilfe einer Feder (20) an die Kontur der Isolierglaseinheit (1, 2, 3) angedrückt sowie dadurch und durch das Hebelviereck-Getriebe (13) gesteuert sind.

10. Vorrichtung nach Anspruch 9, dadurch gekennzeichnet, daß das Abscherwerkzeug (10) als Pflug ausgeführt ist.

## Claims

1. A process for sealing the edge joints of an insulating glass unit, particularly a motor vehicle insulating glass unit, which comprises an inner pane (1), an outer pane (2), optionally a distance piece (3), and an edge joint (4), as well as a projecting strip (5) on one of the glass panes,
wherein the edge joint is filled with a surplus of an adhesive and surplus adhesive is deposited as a bead (7) on the edge joint side of the projecting strip (5),
and wherein the surplus adhesive is mechanically removed, characterised in that the bead (7) of surplus adhesive is first separated from the adhesive in the edge joint by means of a separating knife but is left on the projecting strip (5), and that thereafter the separated bead (7) is removed in a subsequent process step.

2. A process according to claim 1, characterised in that the separated bead (7) is sheared off or removed by milling.

3. A process according to either one of claims 1 or 2, characterised in that the bead (7) of surplus adhesive is separated whilst still in a soft state from the adhesive in the edge joint and that the separated bead (7) is sheared off or removed by milling in its hardened state from the projecting strip.

4. A process according to any one of claims 1 to 3, characterised in that when separating the bead (7) from the adhesive in the edge joint a parting line (9) is exposed.

5. A process according to any one of claims 1 to 4, characterised in that when separating the bead the separating knife is guided at the edge of the pane which is set back in relation to the projecting strip (5) and/or on the projecting strip (5).

6. A process according to any one of claims 1 to 5, characterised in that the shearing off or removal by milling of the separated bead (7) is effected with a tool which is guided at the edge of the pane which is set back in relation to the projecting strip (5) and/or on the projecting strip (5).

7. A process according to claim 1, characterised in that the bead (7) is deposited on a projecting strip (5) which has a coating with a parting agent, and that the separated bead (7) is pulled off or sheared off from the projecting strip (5).

8. A process according to claim 7, characterised in that a parting agent in the form of a continuous adhesive strip is employed.

9. An apparatus for carrying out the process according to claim 6 within the scope of an installation for sealing the edge joints of insulating glass units, which comprises a robot head with a nozzle finger for introducing adhesive into the edge joint and for the simultaneous application of the surplus adhesive to the projecting strip, wherein the robot head is controlled according to the contour of the insulating glass unit, characterised in that a flat quadrangular lever mechanism (13) is attached to the robot head (11), the levers of which are connected to each other via articulated joints (14) and are disposed in a plane parallel to the plane of the insulating glass unit (1, 2, 3), and which has one operating lever (15) and two guide levers (16, 17) attached thereto, wherein the guide levers (16, 17) are mounted at their other ends on the robot head (11) by means of articulated joints (14) which are disposed on a straight line (18) extending towards the nozzle finger (12), that the operating lever (15) has an extension (19) which carries the separating knife (8) and a shearing-off tool (10) for the bead (7) of surplus adhesive, and that the separating knife (8) and/or the shearing-off tool (10) are pressed on to the contour of the insulating glass unit (1, 2, 3) by means of a spring (20) and are controlled thereby and by the quadrangular lever mechanism (13).

10. An apparatus according to claim 9, characterised in that the shearing-off tool (10) is constructed as a plough.

## Revendications

1. Procédé pour sceller les joints de bordure d'un ensemble de vitrage isolant, en particulier d'un ensemble de vitrage isolant pour véhicules, comportant une vitre intérieure (1), une vitre extérieure (2), le cas échéant un écarteur (3) et un joint de bordure (4), ainsi que, sur une des vitres, une bande débordante (5), selon lequel on remplit le joint de bordure abondamment de colle et que la colle excédentaire se dépose sous forme de bourrelet (7) du côté du joint de bordure sur la bande débordante (5), et selon lequel on élimine la colle excédentaire mécaniquement, caractérisé en ce qu'on sépare d'abord le bourrelet (7) de colle excédentaire de la colle dans le joint de bordure au moyen d'un couteau de séparation, mais qu'on laisse sur la bande débordante (5), et qu'on enlève ensuite le bourrelet séparé (7) dans une phase ultérieure du procédé.

2. Procédé selon la revendication 1, caractérisé en ce que le bourrelet (7) séparé est cisaillé ou chanfreiné.

3. Procédé selon l'une des revendications 1 ou 2, caractérisé en que le bourrelet (7) de la colle excédentaire est séparé de la colle dans le joint de bordure quand il est encore mou, et que le bourrelet (7) séparé est cisaillé ou chanfreiné de la bande débordante quand il s'est durci.

4. Procédé selon l'une des revendications 1 à 3, caractérisé en ce qu'une fente de séparation (9) est mise à nu lors de la séparation du bourrelet (7) de la colle dans le joint de bordure.

5. Procédé selon l'une des revendications 1 à 4, caractérisé en ce qu'on guide le couteau de séparation, lors de la séparation du bourrelet, au bord de la vitre en retrait par rapport à la bande débordante (5) et/ou sur la bande débordante (5).

6. Procédé selon l'une des revendications 1 à 5, caractérisé en ce que le cisaillement ou le chanfreinage du bourrelet (7) séparé est effectué avec un outil que l'on guide au bord de la vitre en retrait par rapport à la bande débordante (5) et/ou sur la bande débordante (5).

7. Procédé selon la revendication 1, caractérisé en ce que le bourrelet (7) est déposé sur une bande débordante (5) qui est pourvue d'un revêtement avec un moyen de séparation, et que le bourrelet (7) séparé est retiré ou cisaillé de la bande débordante (5).

8. Procédé selon la revendication 7, caractérisé en ce qu'on travaille avec un moyen de séparation sous forme d'un ruban adhésif continu.

9. Dispositif pour la mise en oeuvre du procédé selon la revendication 6 dans le cadre d'une installation de scellement de joints de bordure d'ensembles de vitrage isolant, comportant une tête de robot avec un doigt d'injecteur servant à introduire la colle dans le joint de bordure et à appliquer simultanément la colle excédentaire sur la bande débordante, la tête de robot étant commandée en fonction du contour de l'ensemble de vitrage isolant, caractérisé en ce qu'à la tête de robot (11) est raccordé un engrenage carré plan à leviers (13) dont les leviers sont reliés entre eux par des articulations (14) et disposés dans un plan parallèle au plan de l'ensemble de vitrage isolant (1, 2, 3), et qui comporte un levier de travail (15) et, reliés à celui-ci, deux leviers de direction (16, 17), les leviers de direction (16, 17) étant fixés par l'autre côté à la tête de robot (11) au moyen d'articulations disposées sur une droite (18) qui s étend vers le doigt d'injection (12), en ce que le levier de travail (15) présente un prolongement (19), lequel porte le couteau de séparation (8) ainsi qu'un outil de cisaillement (10) pour le bourrelet (7) de colle excédentaire, et que le couteau de séparation (8) et/ou l'outil de cisaillement (10) sont serrés au moyen d'un ressort (20) contre l'ensemble de vitrage isolant (1, 2, 3) et commandés ainsi, et par l'engrenage carré à leviers (13).

10. Dispositif selon la revendication 9, caractérisé en ce que l'outil de cisaillement (10) est réalisé sous forme de charrue.
